(19) **Europäisches Patentamt / European Patent Office / Office européen des brevets**

(11) **EP 2 243 668 A1**

(12) **EUROPÄISCHE PATENTANMELDUNG**

(43) Veröffentlichungstag:
    **27.10.2010 Patentblatt 2010/43**

(51) Int Cl.:
    ***B60R 16/03*** *(2006.01)*

(21) Anmeldenummer: **10000952.1**

(22) Anmeldetag: **30.01.2010**

(84) Benannte Vertragsstaaten:
    **AT BE BG CH CY CZ DE DK EE ES FI FR GB GR HR HU IE IS IT LI LT LU LV MC MK MT NL NO PL PT RO SE SI SK SM TR**
    Benannte Erstreckungsstaaten:
    **AL BA RS**

(30) Priorität: **23.04.2009 DE 102009018612**

(71) Anmelder: **Ellenberger & Poensgen GmbH**
    **90518 Altdorf (DE)**

(72) Erfinder:
    • **Meckler, Peter**
      **91224 Hohenstadt/Pommelsbrunn (DE)**
    • **Naumann, Michael**
      **90537 Feucht (DE)**
    • **Gerdinand, Frank**
      **38350 Helmstedt (DE)**

(74) Vertreter: **Tergau & Pohl Patentanwälte**
    **Mögeldorfer Hauptstraße 51**
    **90482 Nürnberg (DE)**

(54) **Auslöseelement für ein Kraftfahrzeugbordnetz**

(57)    Die Erfindung betrifft ein Auslöseelement (1) für einen Strompfad (2) im Bordnetz eines Kraftfahrzeugs, mit einem Spannungseingang ($E_{(+)}$) und mit einem Lastausgang ($A_L$) zum Anschließen einer Last (4) sowie mit einem innerhalb des Strompfades (2) zwischen den Spannungseingang ($E_{(+)}$) und den Lastausgang ($A_L$) geschalteten thermischen Schutzschalter (6), der den Strompfad (2) infolge eines Ansteuersignals (S) galvanisch trennt.

**FIG. 1**

EP 2 243 668 A1

**Beschreibung**

Die Erfindung betrifft ein Auslöseelement für einen Strompfad eines Bordnetzes eines Kraftfahrzeugs.

Sicherheitsvorschriften moderner Kraftfahrzeuge fordern häufig, dass bei einem Unfall (crash) ein elektrisches Bordnetz oder ein bestimmter Strompfad innerhalb des Bordnetzes eines Kraftfahrzeuges von einer Fahrzeugbatterie dauerhaft zu trennen ist. Insbesondere soll dadurch die Brandgefahr infolge eines Kurzschlusses verringert werden. Hierzu werden üblicherweise pyrotechnische, d.h. mit pyrotechnischen Brennstoffen angetriebene Trennelemente eingesetzt, die im Kollisionsfall infolge der Zündung des Brennstoffes und des dadurch bedingten hohen Druckes eine Zerstörung oder Auftrennung eines stromführenden Leiters und somit eine dauerhafte Trennung des durch diesen repräsentierten Strompfades innerhalb einer extrem kurzen Zeitspanne bewirken.

Eine mittels Pyrotechnik arbeitende pyromechanische Trennvorrichtung ist beispielsweise aus der EP 1 447 640 B1 bekannt. Die Zündung einer Treibladung, die einen Trennmeisel über einen Trennkolben antreibt, erfolgt bei der bekannten Vorrichtung elektrisch durch zwei Anschlüsse, die beispielsweise an den Steuerkreis von Sensoren zur Auslösung von Airbags bei einem Unfall des Kraftfahrzeugs angeschlossen sind.

Der Erfindung liegt die Aufgabe zugrunde, ein einfaches und zuverlässiges Auslöseelement für ein Bordnetz bzw. einen Bordnetzstrompfad eines Kraftfahrzeugs ohne Einsatz von Pyrotechnik anzugeben.

Diese Aufgabe wird erfindungsgemäß gelöst durch die Merkmale des Anspruchs 1. Dazu umfasst das Auslöseelement einen thermischen Schutzschalter, der innerhalb des Strompfades zwischen einen Spannungseingang und einen Lastausgang des Auslöseelementes geschaltet ist und den Strompfad - vorzugsweise dauerhaft - infolge eines Ansteuersignals galvanisch trennt. Das Ansteuersignal wird beispielsweise von einem Sensor zur Auslösung der Airbags im Kraftfahrzeug (Airbagsignal) erzeugt.

Der Schutzschalter ist insbesondere ein flinker thermischer Schutzschalter, vorzugsweise nach der Dehndraht-Technologie. Dieser Schutzschalter wird durch einen definierten Kurzschluss ausgelöst. Hierzu ist ein dem Schutzschalter nachgeschalteter und zum Lastausgang parallel geschalteter Leistungshalbleiter (Halbleiterschalter) vorgesehen, an dessen Steuereingang das Ansteuersignal geführt ist.

Zum Anlegen des Ansteuersignals an den Steuereingang des Halbleiterschalters weist das Auslöseelement einen Steueranschluss auf, der intern an den Steuereingang des Halbleiterschalters und extern an einen entsprechenden Sensor (Airbags oder Kollisionssensor) geführt ist. Hierbei wird bevorzugt das von einem sogenannten Crashsensor zum Auslösen des Airbags verwendete Signal genutzt.

Zur Erzeugung des Kurzschlusses wird vorzugsweise ein Thyristor als Halbleiterschalter, beispielsweise über eine Ansteuerelektronik, in den leitenden Zustand überführt. Hierbei wertet die Ansteuerelektronik das Airbag-Sensorsignal oder andere bzw. weitere Sensorsignale aus, die verschiedene Fahrzeugzustände überwachen.

Der thermische Schutzschalter ist dazu eingerichtet und ausgebildet bei einem über diesen - und damit über den Strompfad - fließenden Gesamtstrom größer oder gleich dem 10-fachen des Nennstroms innerhalb einer Auslösezeit kleiner 20ms, vorzugsweise kleiner 5ms, auszulösen. Der Gesamtstrom setzt sich dabei aus dem am Lastausgang abgreifbaren - und somit ggf. über die Last fließenden - Laststrom und dem Auslösestrom zusammen, der über den zur Last parallelen Halbleiterschalter fließt. Der Nenn- oder Bemessungsstrom ist dabei derjenige Strom, der dauerhaft fließen darf.

Der thermische Schutzschalter ist als Öffner ohne automatische Rückstellung ausgeführt. Dies bedeutet, dass nach dem Auslösen eine bewusste, beispielsweise manuelle Wiedereinschaltung erforderlich ist, um die Trennung des Strompfades rückgängig zu machen und somit den über die angeschlossene Last führenden Stromkreis erneut zu schließen.

Zweckmäßigerweise weist der Schutzschalter eine abschmelzbare Sollbruchstelle auf, um im Versagensfalle des thermischen Schutzschalters dennoch eine zuverlässige Trennung des Stromkreises zu gewährleisten. Im Falle eines nach der Dehndraht-Technologie ausgeführten thermischen Schutzschalters schmilzt hierzu der Dehndraht ab. Diese sogenannte Fail-Safe-Funktion sichert einfache Redundanz im Fehlerfall des thermischen Schutzschalters.

Nachfolgend werden Ausführungsbeispiele der Erfindung anhand einer Zeichnung näher erläutert. Darin zeigen:

Fig. 1   ein vergleichsweise detailliertes Schaltbild des Funktionsprinzips des erfindungsgemäßen Auslöseelementes,

Fig. 2   in einem Blockschaltbild das Auslöseelement mit Ein- und Ausgängen gemäß Fig. 1 sowie mit einer Anbindung an einen Crashsensor, und

Fig. 3   in einem Strom- und Signal-Zeit-Diagramm verschiedene Strom- und Signalverläufe im Auslösefall.

Einander entsprechende Teile sind in allen Figuren mit den gleichen Bezugszeichen versehen.

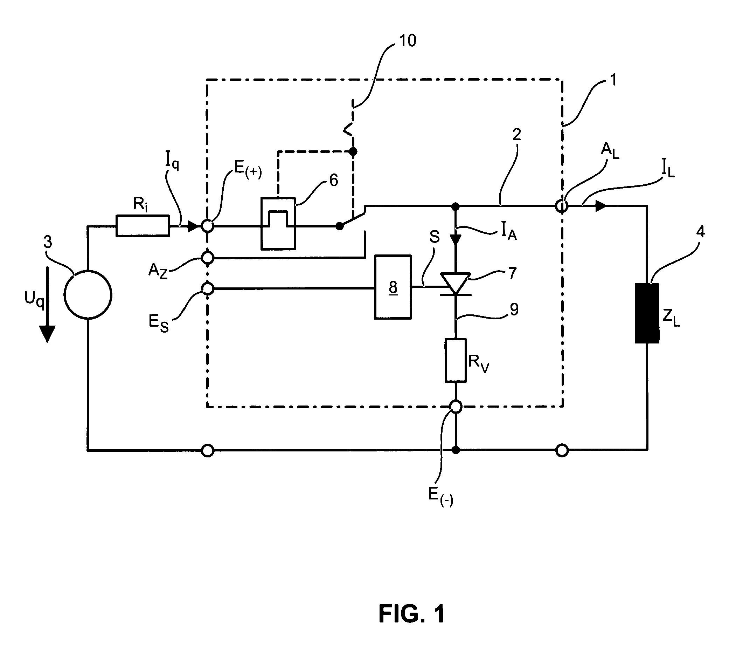

Fig. 1 zeigt ein erfindungsgemäßes Auslöseelement 1 in einem Strompfad 2 eines Bordnetzes eines Kraftfahrzeuges. Das Auslöseelement 1 weist einen Spannungseingang $E_{(+)}$ zum Anschluss an den Pluspol einer Spannungsquelle 3 auf, die eine Quellspannung Uq liefert. Diese Spannungsquelle 3 ist im Bordnetz des Kraftfahrzeugs üblicherweise die Bordnetz- oder Fahrzeugbatterie. Der Minuspol der Spannungsquelle 3 ist an einen Masseanschluss $E_{(-)}$ des Auslöseelementes 1 geführt. Der zwischen der Spannungsquelle 3 und dem Spannungseingang $E_{(+)}$ des Auslöseelementes 1 dargestellte ohmsche Widerstand repräsentiert den Innenwiderstand $R_i$ der Spannungsquelle 3.

Das Auslöseelement 1 weist des Weiteren einen Lastanschluss (Lastausgang) $A_L$ auf, an den eine Last 4 mit einer Lastimpedanz $Z_L$ angeschlossen ist. Die mit dem Lastanschluss $A_L$ verbundene Last 4 ist ebenfalls mit dem Masseanschluss $E_{(-)}$ des Auslöseelementes 1 verbunden.

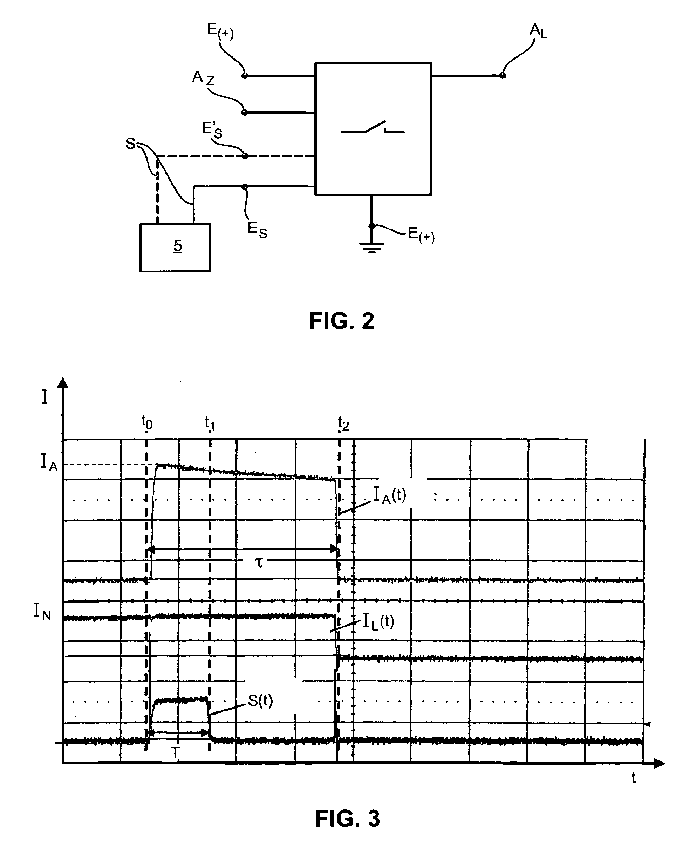

Das Auslöseelement 1 umfasst ferner einen Signalanschluss (Signaleingang) $E_S$. Darüberhinaus umfasst das Auslöseelement 1 einen Statussignalanschluss $A_Z$. Diese Ein- und Ausgangs- bzw. Anschlusskonfiguration $E_{(\pm)}$, $E_S$, $A_L$, $A_Z$ des Auslöseelementes 1 ist auch in Fig. 2 dargestellt, wobei am Masseanschluss $E_{(-)}$ die Masseverbindung angedeutet ist.

Fig. 2 zeigt zudem den Anschluss eines Sensors, beispielsweise eines Airbag- oder Crashsensors 5 an den Signaleingang $E_S$. Da derartige Sensoren aus Sicherheitsgründen häufig zweidrähtig ausgeführt sind, ist in Fig. 2 strichliniert ein weiterer Signaleingang $E'_s$ für einen weiteren Signaldraht des Sensors 5 dargestellt.

Das Auslöseelement 1 ist im Wesentlichen aus einem mechanischen, insbesondere thermischen Schutzschalter 6 und einem Halbleiterschalter 7 aufgebaut. Der Halbleiterschalter 7 ist zwischen den Lastanschluss bzw. Lastausgang $A_L$ und den Masseanschluss $E_{(-)}$ geschaltet und bildet somit bei an das Auslöseelement 1 angeschlossener Last 4 mit dieser eine Parallelschaltung.

Der Halbleiterschalter 7 ist vorzugsweise ein Thyristor, der anodenseitig zwischen dem thermischen Schutzschalter 6 und dem Lastausgang $A_L$ mit dem Strompfad 2 verbunden und kathodenseitig an den Masseanschluss $E_{(-)}$ geführt ist. Der thermische Schutzschalter 6 bildet bei durchgesteuertem Halbleiterschalter 7 mit diesem eine Reihenschaltung.

Gateseitig ist der Halbleiterschalter 7 mit einer Ansteuerelektronik 8 verbunden, die ihrerseits eingangsseitig mit dem Signaleingang bzw. -anschluss $E_S$ des Ansteuerelementes 1 verbunden ist.

An dem Statussignal $A_Z$ des Auslöseelementes 1 ist der Schaltzustand des thermischen Schutzschalters 6 abfragbar, kann also an diesem abgegriffen werden.

Das Auslöseelement 1 führt einen Laststrom $I_L$ und soll diesen bei Eintritt eines bestimmten Ereignisses, insbesondere im Crashfall, in möglichst kurzer Zeit trennen. Die Trennung soll dabei dauerhaft erhalten bleiben und nur durch bewusstes Rückstellen wieder aufgehoben werden können. Hierzu dient der flinke thermische Schutzschalter 6, der bevorzugt in der so genannten Dehndraht-Technologie ausgeführt ist. Zu dessen Auslösung wird ein definierter Kurzschluss erzeugt, wozu der Halbleiterschalter bzw. Thyristor 7 über die Ansteuerelektronik 8 spontan in den leitenden Zustand überführt wird.

Die Ansteuerelektronik 7 wertet hierzu ein bestimmtes Sensorsignal des Sensors 5 oder eine Anzahl von Sensorsignalen verschiedener Fahrzeugsensoren aus und erzeugt ein Ansteuersignal S für den Halbleiterschalter 7, der hierdurch in den leitenden Zustand geführt und somit durchgesteuert wird. Ist demzufolge der thermische Schutzschalter 6 ausgelöst worden, so kann dieser nach dem Auslösen nur durch eine bewusste Aktion, beispielsweise manuell, rückgestellt und somit der Stromkreis über den zuvor unterbrochenen Strompfad 2 wieder geschlossen werden.

Im normalen Betriebsfall fließt ein Strom $I_q$ aus der Spannungsquelle $U_q$ über den thermischen Schutzschalter 6 und durch die Last 4 zum Massenanschluss $E_{(-)}$ und daher zum Minuspol der Spannungsquelle 3 zurück. Solange der Halbleiterschalter 7 gesperrt ist, ist der Laststrom $I_L$ gleich dem Gesamtstrom $I_q$ und damit gleich dem so genannten Nenn- oder Bemessungsstrom $I_N$.

Fig. 3 zeigt die Verläufe $I_L(t)$, $I_A(t)$ und $S(t)$ des Laststroms $I_L$ und des Auslösestroms $I_A$ bzw. des Auslösesignals S über die Zeit t. Wird der Halbleiterschalter 7 leitend gesteuert, so fließt ein Auslösestrom $I_A$ gegen den Minuspol und somit gegen Masse $E_{(-)}$, so dass die Last 4 kurzgeschlossen wird. Um den Auslösestrom $I_A$ in dem zur Last 4 parallelen, über den Halbleiterschalter 7 führenden Auslösepfad 9 zu begrenzen, ist mit dem Halbleiterschalter 7 ein Begrenzungswiderstand $R_V$ in Reihe geschaltet. Die Höhe des Auslösestroms $I_A$ ist mittels des Widerstandswertes des Begrenzungswiderstandes $R_V$ derart eingestellt, dass ein Mehrfaches des Nennstroms $I_N$ des Schutzschalters 6 fießt. Hierbei gilt

$$I_q(t) = I_A(t) + I_L(t)$$

wobei das Impedanzverhältnis $R_V/|Z_L|$ zwischen dem Begrenzungswiderstand $R_V$ und dem Betrag der Lastimpedanz $Z_L$ derart gewählt ist, dass der Lastanteil $I_L(t)$ des Gesamtstromes $I_q(t)$, der über die Last 4 fließt, vernachlässigbar gering ist. Dies ist den Stromverläufen $I_A(t)$ und $I_L(t)$ in Fig. 3 entnehmbar, wobei auf der Ordinate die Maßstäbe für den Auslösestrom $I_A$ und den Laststrom $I_L$ (Nennstrom $I_N$) unterschiedliche sind.

Infolge des durch den Kurzschluss über den Halbleiterschalter 7 bedingten hohen Strompuls, der nun über den thermischen Schutzschalter 6 fießt, öffnet dieser sehr schnell, vorzugsweise mit einer Abschalt- oder Auslösezeit $\tau \leq 5ms$. Infolge des praktisch spontanen Öffnens des Schutzschalters 6 zwingt dieser den Gesamtstrom $I_q$ über den Strompfad 2 zu Null ($I_q = 0$). Demzufolge wird nun auch der durch den Halbleiterschalter 7 und somit über den Auslösepfad 9 fließende Auslösestrom $I_A$ zu Null ($I_A = 0$) mit der Folge, dass der Halbleiterschalter 7 sperrt. Über den Statussignalanschluss $A_Z$ kann der Zustand des Schutzschalters 6 abgefragt und beispielsweise an einen zentralen Bordcomputer zur Weiterverarbeitung gemeldet werden.

Da der thermische Schutzschalter 6 bevorzugt als Dehndraht-Schutzschalter ausgeführt und demnach reversibel oder rückstellbar ist, ist im Gegensatz zu den bekannten pyrotechnischen Trennvorrichtungen eine mehrfache Verwendbarkeit des Auslöseelementes 1 auch nach dem Auslösen gegeben. Hierzu ist der thermische Schutzschalter 6 mittels eines Handauslösers 10 manuell rückstellbar.

Besonders vorteilhaft ist zudem, dass das erfindungsgemäße Auslöseelement 1 vergleichsweise kostengünstig zu realisieren ist und eine hohe Zuverlässigkeit aufweist. Grund hierfür ist, dass im Versagensfalle des Schutzschalters 6 eine Schwachstelle, bevorzugt der Dehndraht, abschmilzt und somit den Strompfad 2 und daher den über die Last 4 geschlossenen Stromkreis trennt. Ferner ermöglicht das erfindungsgemäße Auslöseelement 1 einen integrierten Schutz vor Überströmen und Kurzschlüssen.

Ein weiterer Aspekt des erfindungsgemäßen Auslöseelementes 1 ist, dass der Masseanschluss $E_{(-)}$ derart ausgelegt ist, dass die Bauteile und insbesondere die Leitung den durch den Strompuls beim Auslösen erzeugten Energiestoß

$$E_A = \int_O^\tau I^2_A(t)dt$$

unbeschadet überstehen. Hierbei ist = $t_2 - t_0$ die Auslösezeit.

In dem Diagramm nach Fig. 3 ist $t_0$ der Triggerzeitpunkt, zu dem das Ansteuersignal $S(t_0)$ den Halbleiterschalter (Thyristor) 7 durchsteuert bzw. zündet. Der Zeitpunkt $t_1$ gibt den Endzeitpunkt des Ansteuer- oder Triggersignals $S(t_1)$ und T dessen Dauer an (T= $t_1 - t_0$). Der Auslösestrom $I_A(t)$ fließt solange über den Auslösepfad 9, bis nach Ablauf der Auslösezeit τ des thermischen Schutzschalters 6 dieser den Gesamtstrom $I_q(t)$ unterbricht. Der Stromwert des Auslösestrom $I_A$ ist etwa gleich oder kleiner dem zehnfachen Nennstrom $I_N$ des Schutzschalters 6, d. h. demjenigen Bemessungsstrom, der dauerhaft über den Schutzschalter 6 fließen darf.

Bezugszeichenliste

1 Auslöseelement
2 Strompfad
3 Spannungsquelle
4 Last
5 Sensor
6 (thermischer) Schutzschalter
7 Halbleiterschalter/Thyristor
8 Ansteuerelektronik
9 Auslösepfad

10 Handauslöser

$A_L$ Lastausgang/-anschluss
$A_Z$ Statussignalanschluss
$E_S$ Signaleingang/-anschluss
$E_{(+)}$ Spannungseingang
$E_{(-)}$ Masseanschluss
$I_A$ Auslösestrom
$I_L$ Laststrom
$I_N$ Nennstrom
$I_q$ Gesamtstrom
$R_i$ Innenwiderstand
$R_v$ Begrenzungswiderstand
S Ansteuersignal
T Ansteuersignaldauer
Uq Quellspannung
$Z_L$ Lastimpedanz
τ Auslöse-/Abschaltzeit

Patentansprüche

1. Auslöseelement (1) für einen Strompfad (2) im Bordnetz eines Kraftfahrzeugs, mit einem Spannungseingang ($E_{(+)}$) und mit einem Lastausgang ($A_L$) zum Anschließen einer Last (4) sowie mit einem innerhalb des Strompfades (2) zwischen den Spannungseingang ($E_{(+)}$) und den Lastausgang ($A_L$) geschalteten thermischen Schutzschalter (6), der den Strompfad (2) infolge eines Ansteuersignals (S) galvanisch trennt.

2. Auslöseelement (1) nach Anspruch 1,
**gekennzeichnet durch**
einen dem Schutzschalter (6) nachgeschalteten und zum Lastanschluss ($A_L$) parallel geschalteten Halbleiterschaltet (7), an dessen Steuereingang das Ansteuersignals (S) geführt ist.

3. Auslöseelement (1) nach Anspruch 2,
**dadurch gekennzeichnet,**
**dass** der infolge des Ansteuersignals (S) durchgesteuerte Halbleiterschaltet (7) den Schutzschalter (6) kurzschließt.

4. Auslöseelement (1) nach Anspruch 2 oder 3,
**dadurch gekennzeichnet,**
**dass** der Halbleiterschaltet (7) für eine zur Auslösung des Schutzschalters (6) erforderliche Zeitdauer (T) durchgesteuert ist.

5. Auslöseelement (1) nach einem der Ansprüche 1 bis 4,
**gekennzeichnet durch**
eine Ansteuerelektronik (8) zur Erzeugung des Ansteuersignals (S).

6. Auslöseelement (1) nach Anspruch 5,

**gekennzeichnet durch**
einen Signalanschluss (E$_S$), an den die Ansteuerelektronik (8) eingangsseitig geführt ist.

7. Auslöseelement (1) nach Anspruch 5 oder 6,
**dadurch gekennzeichnet,**
**dass** die Ansteuerelektronik (8) zur Erzeugung des Ansteuersignals (S) eine Anzahl von Sensorsignalen zur Überwachung von Fahrzeugzuständen auswertet.

8. Auslöseelement (1) nach einem der Ansprüche 1 bis 7,
**dadurch gekennzeichnet,**
**dass** der Schutzschalter (6) bei einem über den Strompfad (2) fließenden Gesamtstrom (I$_q$) größer oder gleich dem zehnfachen des Nennstroms (I$_N$) innerhalb einer Auslösezeit ($\tau$) kleiner 20ms, vorzugsweise kleiner 5ms, auslöst.

9. Auslöseelement (1) nach einem der Ansprüche 1 bis 8,
**dadurch gekennzeichnet,**
**dass** der Schutzschalter (6) als Öffner ohne automatische Rückstellung ausgeführt ist.

10. Auslöseelement (1) nach einem der Ansprüche 1 bis 9,
**gekennzeichnet durch**
Mittel (10) zur - insbesondere manuellen - Rückstellung in den ungetrennten Zustand mit über die Last (4) geschlossenem Stromkreis.

11. Auslöseelement (1) nach einem der Ansprüche 1 bis 10,
**dadurch gekennzeichnet,**
**dass** der Schutzschalter (6) eine abschmelzbare Sollbruchstelle zur notfallmäßigen (faile-safe-)Trennung des Strompfades (2) aufweist.

12. Auslöseelement (1) nach einem der Ansprüche 2 bis 11,
**dadurch gekennzeichnet,**
**dass** mit dem Halbleiterschalter (7) ein Begrenzungswiderstand (R$_v$) zur Strombegrenzung in Reihe geschaltet ist.

13. Auslöseelement (1) nach einem der Ansprüche 1 bis 12,
**gekennzeichnet durch**
einen Statussignalanschluss (A$_Z$) zur Abfrage des Schaltzustandes des thermischen Schutzschalters (6).

**FIG. 1**

EP 2 243 668 A1

**FIG. 2**

**FIG. 3**

## EUROPÄISCHER RECHERCHENBERICHT

Nummer der Anmeldung

EP 10 00 0952

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/190519 A1 (BROWN WILLIAM P [US] ET AL BROWN WILLIAM P [US] ET AL) 1. September 2005 (2005-09-01) * Absätze [0007], [0008] - [0018], [0027] - [0059]; Abbildungen 1-5 * ----- | 1-13 | INV. B60R16/03 |
| A | US 2002/080546 A1 (ZDZIECH PETER [US]) 27. Juni 2002 (2002-06-27) * Zusammenfassung; Abbildung 5 * ----- | 1-13 | |
| A | GB 2 337 858 A (BAE MYUNG SOON [KR]) 1. Dezember 1999 (1999-12-01) * Zusammenfassung; Abbildungen 1-15 * ----- | 1-13 | |
| A | GB 2 333 183 A (DELPHI AUTOMOTIVE SYSTEMS GMBH [DE]) 14. Juli 1999 (1999-07-14) * Zusammenfassung; Abbildungen 1-7 * ----- | 1-13 | |
| A | GB 2 321 749 A (DELPHI AUTOMOTIVE SYSTEMS GMBH [DE]) 5. August 1998 (1998-08-05) * Zusammenfassung; Abbildung 1 * ----- | 1-13 | RECHERCHIERTE SACHGEBIETE (IPC) B60R |

Der vorliegende Recherchenbericht wurde für alle Patentansprüche erstellt

| Recherchenort | Abschlußdatum der Recherche | Prüfer |
|---|---|---|
| Berlin | 13. Juli 2010 | Wauters, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**EP 2 243 668 A1**

EP 10 00 0952

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2010

| Im Recherchenbericht angeführtes Patentdokument | | Datum der Veröffentlichung | Mitglied(er) der Patentfamilie | | Datum der Veröffentlichung |
|---|---|---|---|---|---|
| US 2005190519 | A1 | 01-09-2005 | KEINE | | |
| US 2002080546 | A1 | 27-06-2002 | US | 2005093371 A1 | 05-05-2005 |
| GB 2337858 | A | 01-12-1999 | BR | 9901885 A | 16-05-2000 |
| | | | CA | 2262962 A1 | 29-11-1999 |
| | | | DE | 19909123 A1 | 16-12-1999 |
| | | | FR | 2779270 A1 | 03-12-1999 |
| | | | FR | 2780197 A1 | 24-12-1999 |
| | | | IT | MI990602 A1 | 25-09-2000 |
| | | | JP | 11354005 A | 24-12-1999 |
| | | | US | 6111327 A | 29-08-2000 |
| GB 2333183 | A | 14-07-1999 | US | 6087737 A | 11-07-2000 |
| GB 2321749 | A | 05-08-1998 | DE | 69805019 D1 | 29-05-2002 |
| | | | DE | 69805019 T2 | 02-10-2002 |
| | | | EP | 0857603 A1 | 12-08-1998 |
| | | | US | 6049140 A | 11-04-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1447640 B1